# EUROPEAN PATENT SPECIFICATION

(11) **EP 1 943 085 B1**
(45) Date of publication and mention of the grant of the patent: **22.06.2016**
(21) Application number: 06791443.2
(22) Date of filing: 04.10.2006
(51) Int. Cl.: B29C 70/34, B29C 70/54

(54) **A METHOD FOR PRODUCING A FIBRE-REINFORCED PRODUCT**
VERFAHREN ZUR HERSTELLUNG EINES FASERVERSTÄRKTEN PRODUKTS
PROCÉDÉ DE PRODUCTION D UN PRODUIT RENFORCÉ PAR DES FIBRES

(30) Priority: 04.10.2005 DK 200501390
(43) Date of publication of application: 16.07.2008
(73) Proprietor: LM WP Patent Holding A/S, 6000 Kolding (DK)
(72) Inventor: HANSEN, Tim, Møller, DK-6580 Vamdrup (DK)
(74) Representative: Hussey, Paul Anthony
(86) International application number: PCT/DK2006/000552
(87) International publication number: WO 2007/038930

(56) References cited:
- WO-A-2006/058540
- FR-A- 1 327 581
- FR-A- 2 870 861
- FR-A- 2 871 095
- GB-A- 2 360 483
- GB-A- 2 381 493
- US-A1- 2003 025 232
- US-A1- 2005 037 678

## Description

### Field of the invention

The present invention relates to a method of producing a fibre-reinforced product.

### Background

Fibre-reinforced resin composite structures are used in the manufacture of parts and finished goods in various industries such as wind turbine, automotive, trucking, aerospace, marine, rail, appliance, container, constructions, anti-corrosion, electrical and medical industries, as well as in athletic equipments, recreation vehicles and such.

Two types of mould processes can be used for constructing fibre-reinforced structures, i.e. open mould or closed mould processes. The open mould process comprises laying or placing either dry fibres or resin-impregnated fibres into an open mould of the desired shape. In closed mould processing, fibres and/or other reinforcing means, also called the "pre-form", are cut to fit and then placed in the mould. A method of closing and pressing the pre-form against the mould is then employed. The mould can be closed e.g. with a vacuum bag in vacuum forming or with a corresponding male/female mould. Resin, if not pre-pregged, is introduced into the pre-form through ports into the enclosure and e.g. when using the vacuum injection technique, the vacuum may facilitate the introduction of the resin. Upon resin curing the closure of the mould is first removed, followed by the finished part.

The vacuum injection is a closed mould process often used to produce components for the wind energy industry, e.g. wind turbine blades. The vacuum injection utilises one hard, rigid mould part and one flexible bag or membrane that, when joined, are sealed to form a "closed" mould thereby forming the other mould part. Typically before applying the flexible bag or membrane, a porous member is placed on top of the pre-form. In the case of reusable vacuum bag or membrane, distribution channels may be incorporated into the bag. Vacuum is then applied and transfers resin through feed-lines into the mould and through the fibres' pre-form. This technique is often referred to as surface vacuum injection/infusion since the resin is introduced at the top surface of the laminate.

EP 525 263 A1 describes a vacuum injection process where the resin is introduced from the mould side and having the vacuum outlets on the membrane side. The document describes layering of resin distribution members, peel ply and fibre lay up in the mould. However, this document does not describe the application of gelcoat in the mould in the production of the fibre-reinforced structure. Furthermore, the application of the resin through inlets in the mould is not flexible, i.e. it can not be changed to e.g. application of resin through the membrane or other parts.

Traditionally, in the vacuum injection process the layering of materials is essentially as follows: the inner surface of the mould is covered with a waxy substance to prevent the formed object to adhere to the mould. Thereafter a layer of gelcoat is applied to the surface and the gelcoat is allowed to gel. On top of the gelcoat the layers of fibres are placed and thereafter the porous member and the flexible bag or membrane enclosing the whole setting. When the resin is introduced through inlets on the membrane side, the porous member secures proper and complete distribution of the resin in the mould.

Some composites also require the use of a peel ply. A peel ply is a layer placed between the fibres and the mould. Most often the peel ply is placed between the fibres and the flexible membrane. The peel ply allows resin to pass through, but will not stick to the resin once it cures. A peel ply is often used in processes which do not include a gelcoat and provides surfaces which are conditioned for the application of paint or other types of coating. A peel ply is most often made of plastics, e.g. nylon®, polyester or Kevlar® materials.

The gelcoat is applied on the form, e.g. by spraying, which thereafter gels to form a uniform thin layer on the surface of the mould. Traditional gelcoat materials are thixotropic materials which can be evenly distributed, do not "run" in the mould before they gel and have the desired properties such as a hard smooth surface after moulding. However, when these gelcoat layers gel toxic fumes can be formed and the gelling time can also extend the time for moulding process. Another problem with traditional gelcoat layers is the formation of air pockets, bubbles or voids in the layer which will weaken the final product as these pockets can cause the gelcoat to crack in cold, frosty weather.

FR 1 327 581 discloses a method for producing a composite component in a mould, where the component comprises two layers of reinforcing fibre material and between these layers a layer of spacer material, i.e. a layer with a structure which is more permeable to resin than the fibre material. The reinforcing fibre layers are placed outermost in the mould. Having placed the layers in the mould, the mould is closed and evacuated. Thereafter resin is led into the mould through an inlet in the mould. The inlet is placed so that the resin is distributed to the reinforcing fibre layers through the intermediate spacer layer. The intermediate spacer layer may be formed of a thermoplastic material. The spacer layer remains in its initial state in the finished composite component.

US 2003/0025232 discloses an apparatus for fabricating fibre-reinforced composite parts. A number of layers of fibre-reinforced material are stacked, optionally with peel plies on the top and at the bottom. On top of the uppermost peel ply a resin distribution system is placed comprising a resin distribution medium and a containment layer. The above layers of material are placed on a mould and an impervious sheet is taped to the mould to form a chamber. The chamber is evacuated and resin is supplied through an inlet to the mould and distributed to the fibre-reinforced material layers via the distribution system. The peel plies may be removed from the finished composite part, whereby the distribution system does not constitute a part of the final fibre-reinforced composite component. Provided peel plies are not used, the distribution system, i.e. the resin distribution medium and containment layer form a part of the final fibre-reinforced composite component. However, the distribution system is present in the final composite component in its initial structure or state.

The prior art methods of producing fibre-reinforced structure are labour intensive, include multiple steps of adding and removing layers and are costly as some of the layers can only be used during the production, cannot be reused and need to be discarded afterwards. Furthermore, during the production it is not possible to control the quality of the produced structures and it is only after the moulding process has ended that possible flaws, e.g. uneven distribution of resin, may be apparent. These flaws will have to be mended manually after moulding, which prolongs the production time and is difficult and labour intensive.

It is the object of the present invention to provide an easy method of producing fibre-reinforced product with a hard smooth surface.

It is another object of the present invention to provide a more environmentally friendly method of producing a fibre-reinforced product.

Furthermore, the invention relates to a porous member having a three-dimensional sheet structure allowing flow of a liquid phase across the sheet structure and in the plane of the structure, said porous member being capable of coalescing to form a continuous layer in the presence of resins for producing a fibre-reinforced product.

Still further the invention relates to the use of a porous member having a three-dimensional sheet structure allowing flow of a liquid phase across the sheet structure and in the plane of the structure, said porous member being capable of coalescing to form a continuous layer in the presence of resins for producing a fibre-reinforced product as a layer in the production of fibre-reinforced products.

The present invention also relates to the use of a porous member having a three-dimensional sheet structure allowing flow of a liquid phase across the sheet structure and in the plane of the structure, said porous member being capable of coalescing to form an outer continuous layer in the presence of resins for producing a fibre-reinforced product.

### Short description of the drawings

Figure 1 illustrates the prior art production of a laminate by the VARTM-method.
Figures 2-3 illustrate different embodiments of the method according to the present invention where a porous member is used for the resin distribution.
Figure 4 illustrates several embodiments of a porous member according to the present invention.

### Definitions

The term `gelcoat'- as used herein is well known to a person skilled in the art. It stands for a tough, protective layer of resin that is sprayed or brushed into the mould before reinforcing fibres are laid. Fibres are laid once the coating "gels", hence the name. Gelcoat also protects the reinforcing fabrics and resins in the completed product from UV light and abrasion. The gelcoat material can also include pigments to give a coloured product. Such products do therefore not need to be painted after the moulding process.

The term 'mould', or form as used herein, is also well known to a person skilled in the art. A 'mould' according to the present invention is to be understood as a frame on or around which an object is constructed. The 'mould' comprises all parts contributing to the forming of the fibre-reinforced structure.

The term 'fibre' as used herein means thin filamentous fibres, but may also be rovings (fibre bunches), bands of rovings or mats, which may be filt mats of single-fibres or mats of fibre rovings. Alternatively, fibre in the form of nonwoven, melt-spun fibre mat or fabric may be impregnated with a modified polyester matrix resin to form a prepreg for use in a variety of fabrication processes. Chopped or milled fibres may also be used. The fibres used in the present invention are preferably glass fibres or carbon fibres. By the term carbon fibre is meant any of the conventional carbonized or graphitized fibres obtained by known processes from such organic fibre or filament precursors as rayon, polyacrylonitrile, pitch or the like.

The term 'resin' as used herein means a natural or synthetic resin or a suitable polymer. The resin is preferably a combination of a liquid ethylenically unsaturated monomer and unsaturated polyester to form a polyester resin composition. The resin is more preferably polyester, vinyl ester and epoxy resin.

However, the resin in the context of the present invention can also be a combined system including other chemicals such as catalysts, hardening agents, accelerator and additives (e.g. thixotropic, pigment, filler, chemical/fire resistance, etc.). Preferred commercially available resins used in the present invention include standard resins on the market, e.g. from Reichhold Inc.

The term 'curing' as used herein means that the resin becomes a chemically resistant hard solid. The molecules in the resin will cross-link assisted by catalysts or hardening agents, and the process is a non-reversible chemical reaction.

The term "external treatment" as used herein is used to designate an influence being external relative to the porous member. The treatment may e.g. be application of external heat or influence from heat formed during curing or a combination thereof or influence from solvents or constituents of a resin composition against which the porous member is only temporary stable.

The term "porous" as used herein is used to describe a material structure filled with voids or pores and relates to a three-dimensional structure allowing flow of a liquid phase in multiple directions of the structure such as a knitted, woven, needled or crocheted, foamed, or filter-like material.

### Detailed description

The present invention relates to a method of producing a fibre-reinforced product, which method comprises the steps of:
a) placing at least one porous member in a mould;
b) placing one or more layer(s) of reinforcing fibres in the mould;
c) introducing resin for distribution through the porous member to the fibre layers; and
d) allowing the resin to cure and the distribution member to coalesce to form a continuous layer
wherein the porous member is placed so as to form an outermost layer when coalesced said outer layer having the same characteristics as traditional gelcoat material. In this embodiment the porous member functions as a distribution member during the filling of the mould, where after it is coalesced and forms an outer layer.

Thus, in one embodiment the invention relates to a method of producing a fibre-reinforced product having an outer continuous surface layer at one surface thereof using a mould being provided with a part having one or more inlet opening(s) for introducing resin into the mould, which method comprises the steps of:
a) placing a porous member in contact with the part of the mould being provided with the inlet opening(s);
b) placing one or more layer(s) of reinforcing fibres on top of the porous member,
c) closing the mould;
d) introducing resin into the mould through the inlet opening(s) of the mould and the porous member in an amount to fill the void in the reinforcing fibre layer(s); and
e) allowing the resin to cure and the porous member to coalesce to form the outer continuous surface layer at one surface of the fibre-reinforced product.

The invention is based on the discovery that it is possible to combine the gelcoat and resin distribution member in one layer, and by this combination the process of producing fibre-reinforced components, such as wind turbine blades, can be simplified, man hours can be saved and costs can be reduced.

It is also considered an embodiment of the invention that the porous member does not constitute the full outer surface of the product, but only a part thereof leaving room for a post-treatment for preparing desired surface properties or effects.

The steps of the method of the invention can be performed in the order described above, but can also be performed in a different order without deviating from the gist of the invention.

When using the above-described method, the layer corresponding to a gelcoat which is applied to the mould is initially in the form of a porous member, but the final product comprises a continuous layer in some cases, forming the outer surface of the product. In cases where the porous member is located between layers of reinforcing fibres, the porous member may constitute a continuous layer in the body of the final product. Accordingly, the step of applying a resin distribution member, which needs to be removed after moulding, is avoided. This will save costs, reduce the production time for each product and be more environmentally friendly. Some resin material is also enclosed in the discarded distribution layer and will thus be lost.

In another embodiment of the invention the porous member is placed so as to form an inner layer when coalesced.

Alternatively, when the porous member is located between layers of reinforcing fibres, the member may merge into the resin during the curing thereof forming an inner zone or layer having a different composition and different properties which may be controlled as desired.

When applying one or more porous members according to the method of the present invention between the fibre layers for distribution purposes, the resin is most probably applied through inlets located in the joint between the rigid mould and the membrane, which will supply resin to the porous members.

Furthermore, the quality control of the moulding process is made easier. During the moulding process the introduced resin might not reach some areas, or too small an amount of resin might be transported to an area. Using the methods of the state of the art, this problem will only become apparent after the composite has been removed from the mould and requires additional man hours and material to be mended. By using transparent membranes to close the mould, it is possible to visually inspect through the membrane during the process, whether the resin has reached all areas in the laminate in a sufficient amount. Accordingly, the yield of high quality composites produced will rise and the rate of rejection of products may be reduced. Furthermore, by applying the resin through inlets in the mould or in the joint between the rigid mould and the membrane if used, the flaws will most probably be on the side of the moulded item which faces inwards in the final product. Accordingly, reparations will also face inwards and the side of the moulded item facing outwards is flawless from the beginning.

Resin inlets can also be placed in the membrane or other parts of the closed mould for reparation purposes. Accordingly, should there be insufficient resin in some parts of the mould, additional resin can be applied to inlets located in or around that area for reparation purposes.

In a further embodiment of the invention the coalescing of the porous member is caused by a chemical treatment, or by influence of heat, radiation or vibrations or a combination thereof.

In yet a further embodiment the coalescing of the porous layer to form a continuous layer is caused at least partly during the curing of the resin.

In yet another embodiment the coalescing of the porous layer to form a continuous layer is caused at least partly by action of styrene present during the curing of the resin.

In another embodiment the coalescing of the porous layer to form a continuous layer is caused at least partly by heat produced during the curing of the resin.

In yet another embodiment the method is a vacuum assisted injection process.

In still another embodiment the produced fibre-reinforced product is a part of a shell of a wind turbine blade.

In another aspect the invention relates to a porous member having a three-dimensional sheet structure allowing flow of a liquid phase across the sheet structure and in the plane of the structure, said porous member being capable of coalescing to form a continuous layer in the presence of resins for producing a fibre-reinforced product.

A porous member according to the invention suitably has a sheet structure in the form of a knitted, woven, needled or crocheted, foamed, or filter-like material.

Knitted, woven, needled, crocheted, or filter-like materials may be made from fibrous materials in a manner known per se for formation of fibrous materials. Suitable materials for forming a porous member according the invention are materials having properties enabling coalescing of the porous member to be caused at least partly by a chemical treatment or by influence of heat, radiation or vibrations or a combination thereof.

In one embodiment of the invention the porous member is made from such a material that the coalescing of the porous member may be caused during the curing of the resin.

In one embodiment of the invention the porous member is made from such a material that the coalescing of the porous layer may at least partly be caused by action of styrene present during the curing of the resin.

The porous member according to the invention may also be made from such a material that the coalescing of the porous layer to form a continuous layer may be caused at least partly by heat produced in the curing process of the resin.

The present invention also relates to the use of a porous member according to the invention in the production of a fibre-reinforced product.

In another embodiment the invention relates to the use of a porous member having a three-dimensional sheet structure allowing flow of a liquid phase across the sheet structure and in the plane of the structure, said porous member being capable of coalescing to form a continuous layer in the presence of resins for producing a fibre-reinforced product as a layer in the production of fibre-reinforced products.

In a further embodiment the invention relates to the use of a porous member having a three-dimensional sheet structure allowing flow of a liquid phase across the sheet structure and in the plane of the structure, said porous member being capable of coalescing to form an outer continuous layer in the presence of resins for producing a fibre-reinforced product.

In a use according to the invention the porous member is suitably made of a thermoplastic material being capable of coalescing to form a continuous layer at a temperature achieved by heat produced in the curing process of the resin.

Gelcoats for composite articles are generally multi-component formulations consisting of a base resin system having incorporated therein various fillers, pigments and other additives. While the selection of these constituents plays an important role in determining the end properties of the gelcoat and its suitability for a given application, the selection of the base resin system dictates the overall end use performance of the gelcoat as a whole. It is well known that unsaturated ester-based polymers are conventionally utilized as the primary backbone in composite gelcoat systems, especially due to demands of durability and aesthetics. These unsaturated polyester resins are typically used together with a reactive diluent, usually an ethylenically unsaturated organic monomer. The unsaturated organic monomers are selected such that they co-polymerize through room temperature free-radical cure with the polyester resin to form the gelcoat. As generally used, the unsaturated organic monomers include styrene, alpha-methylstyrene, vinyltoluene, and divinyl-benzene.

The resin distribution layer used in the production of fibre-reinforced composites is most often placed on top of a peel ply to aid in the delivery and distribution of the liquid resin down and/or sideways through the laminate stack. The resin distribution layer is usually a sheet of woven filaments which is removed from the produced fibre-reinforced composite after moulding. The resin distribution layers are often not included in the final product, and they do not contribute to the product in any way other than assisting in the production process. Traditional resin distribution layers are primarily made of thermoplastic materials, e.g. nylon.

The porous member according to the present invention partially serves the same purpose as the above-mentioned resin distribution layer. The porous member has a porous structure and as a result of an external treatment it coalesces to form a continuous layer. The porous structure of the material forming the member can e.g. be due to that the material is woven, knitted, needled, crocheted, foamed or filter-like, is in the form of a sponge or in any other way provides passage for liquids from one side of the porous member layer to the other side of the layer or sideways through the laminate in an easy and evenly distributed fashion. The porous member according to the invention can also initially be in the form of a liquid or foam which is sprayed on the mould and which subsequently forms a porous layer as described above.

The porous member according to the present invention is made of material which can be formed to obtain the above-described structure and which can, due to external treatment, become a continuous layer. The final outer layer of the product is smooth and hard and as the original porous member can also contain pigments, the produced continuous layer can be coloured. Accordingly, the surface of the produced structure may not need further treatment to obtain its final appearance.

Materials suitable for use in the above-described porous member are e.g. materials which "melt" or dissolve to form a continuous layer due to chemical treatment, heat treatment, radiation, vibrations or any other means which obtains the same result or a combination thereof. These materials can constitute the porous member or be a part of the porous member.

In an embodiment of the invention the porous member according to the present invention is made of a therrnoplastic material not being soluble in the resin used in order to avoid that the member dissolves during the curing of the resins and becomes a part of the fibre/resin combination. Thermoplastic materials are also advantageous when external conditions, such as heat, is used to trigger the coalescing of the porous member.

In another embodiment the material used for producing the porous member according to the invention is made from a material which has a short-time tolerance to the chemical effect of the constituents of the resin, but which will soften and coalesce due to the action of constituents of the resin to form a continuous layer.

Most resins and other materials used in fibre-reinforced composites exhibit an important common property in that they are composed of long chain-like molecules consisting of many simple repeating units. These resins can be classified under two types, 'thermoplastic' and 'thermosetting', according to the effect of heat on their properties.

Thermoplastics soften with heating and eventually melt and harden again during cooling. The process of passing the softening or melting point on the temperature scale can be repeated as often as desired without any appreciable effect on the properties of the material in either state. Typical thermoplastics include nylon, polyethylene, polypropylene and ABS, and these can be reinforced, although usually only with short, chopped fibres such as glass.

Thermosetting materials are formed by a chemical reaction in situ, where the resin and hardener or resin and catalyst are mixed and then undergo a non-reversible chemical reaction to form a hard, infusible product. In some thermosetting materials, such as phenolic resins, volatile substances are produced as by-products while other thermosetting resins such as polyester and epoxy cure by mechanisms that do not produce any volatile by-products. Once cured, thermosetting materials will not become liquid again if heated, although above a certain temperature their mechanical properties will change significantly due to decomposition.

According to the present invention the use of thermosetting materials is advantageous as such resin materials usually comprise in a combination including other chemicals which can be utilized in the method of the invention. These chemicals can cause the discontinuous porous member to coalesce and become continuous. Furthermore, these processes are often exothermal which can contribute to the coalescing process.

In a further embodiment the thermosetting resin material comprises a liquid monomer, preferably a vinylaromatic monomer, more preferably styrene, which is copolymerizable with said thermosetting resin material. According to an embodiment the resin is an unsaturated polyester resin (orthophtalic polyester resin) dissolved in 40-45% styrene.

In a further embodiment of the invention the thermosetting material is combined with styrene. Styrene is a solvent which is known to be capable of dissolving many non-polar polymers. The styrene performs the vital function of enabling the resin to cure from a liquid state to a solid state by crosslinking the molecular chains of the polyester without the formation of any by-products. These resins can therefore be moulded without the use of pressure and are therefore often called low pressure resins. However, styrene in the closed mould can dissolve the polymers forming the porous member and cause the discontinuous porous member to coalesce and become continuous. The heat formed in the exothermal reaction can at the same time contribute to the coalescing process.

It is also advantageous that the curing process of the thermosetting material is exothermal as heat can contribute to the coalescing of the porous member.

By controlling the amount of styrene, heat produced and other features, the coalescing process can be controlled in order to secure the best results. When the porous member is placed adjacent to the mould, it is to be avoided that the coalescing starts too early while the fibre/resin composition has not cured enough or is not evenly distributed, but the coalescing may on the other hand not be too slow either in order to ensure the desired properties of the final product.

Advantageous materials in the present invention for use in the porous member or being a part of the porous member are thermoplastic materials. The suitable materials coalesce due to raised temperature. The temperature can be due to an exothermal curing process of the resin or it can be applied from the outside, e.g. by heating the mould. Advantageous thermoplastics may soften and coalesce at the hardening temperature of the product or at temperatures not being detrimental to the properties of the final product.

Advantageous materials in the present invention for use in the porous member or being a part of the porous member are thermosetting materials. The suitable materials coalesce due to chemical interaction e.g. from a solvent from the curing process of the resin. Suitable materials are e.g. polystyrene (PS), polyurethane (PUR), polyphenylene oxide (PPO), polypropylene, ABS plastics (acrylonitrile-butadiene-styrene-terpolymer), PVAc (polyvinyl acetate), blends and/or special formulations.

Other suitable materials in the present invention for use in the porous member or being a part of the porous member fulfil one or more of the below listed criteria. They:
- dissolve in the presence of a solvent
- can withstand raised temperatures
- can form the porous member or become a part of the porous member.

The material can also be made of or include nanoparticles and/or POSS (polyhedral oligomeric silsesquioxane). Some nanoparticles can contribute to the strength of the layer. Furthermore, the material is preferably inexpensive, easily accessible and environmentally friendly.

Suitable materials can dissolve due to chemical treatment with a solvent, e.g. styrene. Styrene is used in the curing of the resin in the mould. Accordingly, materials which dissolve in the presence of styrene are advantageous as it will not require the addition of other chemicals. These styrene soluble materials can e.g. be polyvinylacetate (PVAc), copolymers of PVAc and polystyrene (PS), butyrated lignin, polybutadien, poly(styrene-co-alkylmaleimid), polyethylenglycolfumarate, etc.

The production process of a fibre-reinforced composite according to the present invention, in this case a wind turbine blade, will be explained in more detail with reference to the drawings showing some embodiments of the invention.

### Description of preferred embodiments

The invention will now be described in more detail with reference to the drawings.

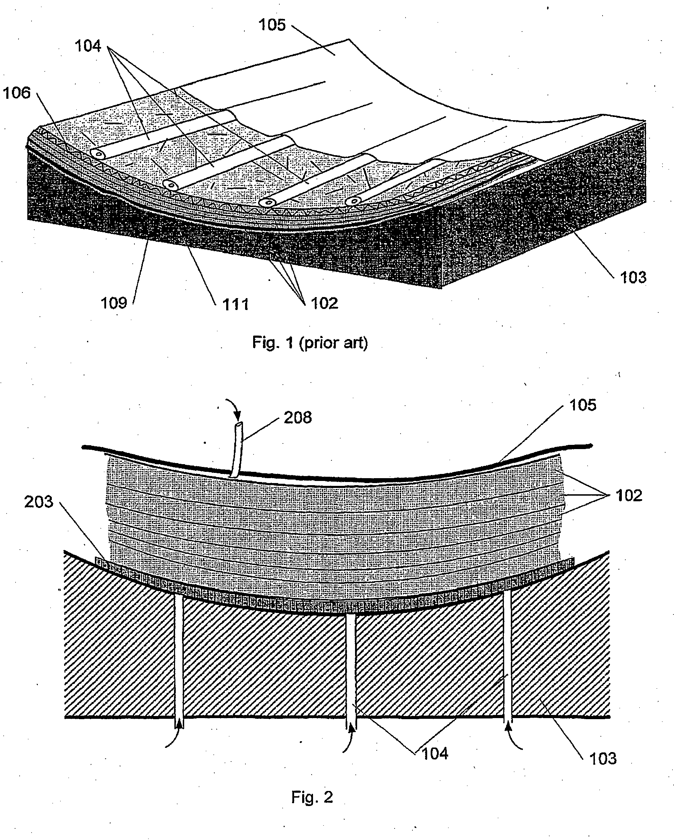

Figure 1 illustrates the manufacture of a laminate 101 by a so-called VARTM-process (Vacuum Assisted Resin Transfer Moulding) as known in the art where the layers 102 in the laminate are impregnated with resin totally or partly by means of vacuum. VARTM is a very used production method used for example in the production of parts for wind turbine blades. The form part or mould 103 may be coated on the inside with a waxy substance 109 to prevent adhesion between the moulded product and the mould. This waxed surface can be reused for more than one moulding processes, before it needs to be reapplied. Thereafter, a layer of gelcoat 111 is applied to the surface and the gelcoat is allowed to gel. This gives a somewhat hard surface to the finished product with a high finish. A number of layers 102 are laid in the mould 103. In some areas a core material (e.g. balsawood) can be laid between the fibre layers as well, forming a sandwich construction. The layers 102 can, for instance, comprise layers or mats of fibrous materials such as glass fibres or carbon fibres and can be both woven and/or non-woven or of chopped fibres. The resin is distributed and infused via a number of inlets 104 which are normally placed over the layers 102 as illustrated in the figure 1. These inlets are distributed over the layers so as to assure an even and uniform distribution of the resin avoiding empty pockets where the layers are not impregnated. In order to facilitate and improve the distribution of the resin a so-called resin distribution member or spacer 106 is often applied next to the inlet tubes. The layers are covered and the mould is closed with a vacuum membrane or film 105 which can be fixated in several ways along the edges of the form part (not shown) so that the mould cavity between the vacuum membrane and the mould is sealed. Vacuum in the mould cavity is established prior to the injection, for instance from along the mould edge or from tubes in the form part. Hereafter the resin is distributed from the inlets 104 and out and down through the resin distribution member 106 impregnating the layers 102 by infusion caused by the vacuum and/or by injection where the resin supply is under pressure.

When the laminate is produced and at least partly cured the vacuum membrane is removed and often also the resin inlets. The resin distribution member can then optionally be left to become an integrated part of the finished laminate which, however, constitutes a very resin rich layer without any or with only very limited structural benefits, but on the contrary adding unfavourably to the weight of the product. Alternatively the resin distribution member can be removed and discarded together with the resin absorbed in it.

In the following figures 2-3 the various parts of the process used in the present invention are designated with the same reference numbers as in figure 1.

Figure 2 illustrates in a cross sectional view one embodiment of a production method according to the present invention in which a porous member is employed to optimize the manufacturing method along with the finished laminate. Here a porous member 203, also forming a part of the invention, is laid in the mould 103 as the outermost layer together with a number of fibre reinforced layers 102. The resin is then in one embodiment introduced through a number of inlets 104 in the mould or form part 103.

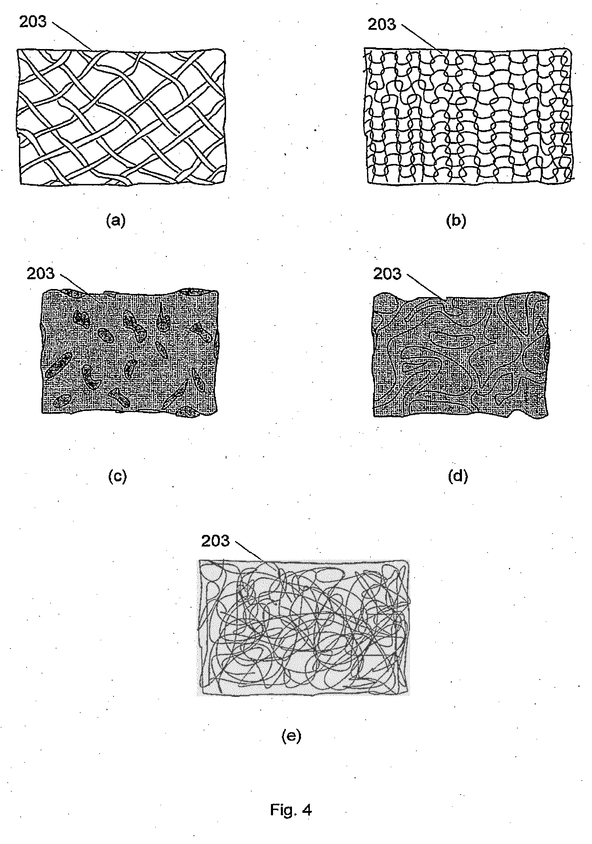

Alternatively the inlets may also be in the shape of thin perforated tubes placed next to the porous member 203 which then are left to become an integrated part of the finished laminate. The porous member 203 is of a three-dimensional structure which allows for the resin to be easily distributed across and along the porous member thereby facilitating and maximising the resin distribution throughout the laminate. Different structures of porous members according to the invention are sketched in figure 4. According to the invention the porous member coalesce to form a continuous layer thereby making the gelcoat layer superfluous. A further advantage of the present invention is that resin injection and distribution from the form or mould side makes it possible to discover e.g. by visual inspection from the other side of the laminate any possible pockets or areas with insufficient or absent resin. These areas which have not received enough resin can then be treated locally by application of resin through one or more secondary resin inlets 208 which, for instance, might be in the shape of tubes or other types of inlets perforating the vacuum membrane.

The curing time is dependent on various factors and their combination, e.g. temperature, curing agent, resin system, injection process, laminate thickness, etc.

The curing process is exothermal and during the curing process the styrene from the resin composition is distributed/evaporates inside the closed mould. In the porous member 203 the styrene dissolves the polymers to form a protective surface. The amount of styrene and the polymer in the porous member 203 are selected so that the time between the introduction of the resin into the mould 103, where the porous member 203 functions as a resin distribution layer, and the time before the styrene starts to influence the porous member 203 is optimized.

When the curing process has finished the vacuum membrane 105 is released from the mould 103 and the finished product, e.g. a part of a wind turbine blade is removed from the mould 103.

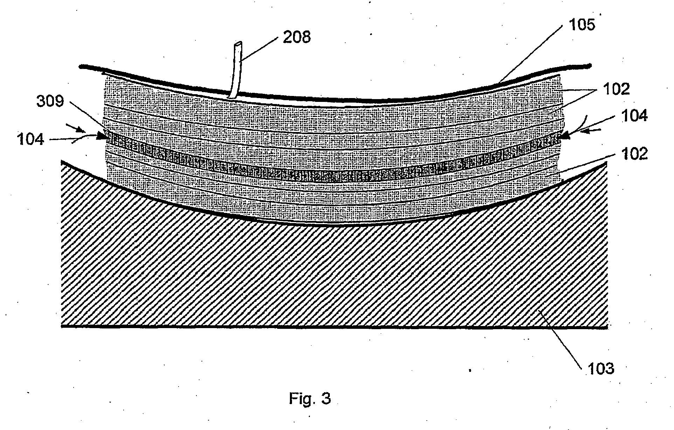

Figure 3 shows another embodiment of a production method according to the present invention in a cross sectional view. This process is essentially the same as described in figure 2. However, here the layers include a secondary porous member 309 according to the present invention between some of the fibre layers 104. The resin is here then introduced into the mould cavity from along some or all of the edges of the mould or form part 103 and into said porous member 309. Hence, the secondary porous member 309 will secure a proper and optimal distribution of the resin. Alternatively, the resin may be introduced through inlet tubes placed adjacent to the porous member 309. As the porous member 309 here is layered between fibre sheets it will not be removed after moulding. In one embodiment the porous member coalesces as described above to form a continuous layer within the finished laminate. In a further embodiment the porous member coalesces and flows more or less into or is absorbed by the neighbouring layers of materials 102 thereby ceasing to constitute a discrete layer in the finished laminate. An internally placed secondary porous member as described above may be advantageous, for instance in the production of very thick laminates where the resin in this way may be injected and distributed from more thickness positions throughout the laminate.

One or more internally placed secondary porous members 309 may be used in combination with an outermost placed porous member 203 as described with reference to figure 2. A further porous member 203 can also be placed adjacent to the vacuum membrane 105 primarily for distribution purposes.

Figure 4 shows various embodiments of the porous member 103. The embodiment shown in (a) is woven, the one in (b) is knitted, in (c) the material has a number of pores, e.g. like in an open celled foam, in (d) the material is of an undefined porous structure, e.g. like in a sponge, and the material in (e) is of a mesh-like or filter-like structure.

### Examples

### Example 1

### Dissolution of polymers in styrene

Selected polymers are placed in beakers containing styrene. The selected polymers are (a) polystyrene, (b) polyvinyl acetate and (c) polyurethane. The capability of styrene to dissolve the selected polymers is observed and noted as a function of elapsed time.

### Example 2

### Dissolution of polymers in styrene when external heat is supplied

The same polymers as in example 1 are tested as well as (d) poly(styrene-co-alkylmaleimid) and (e) polyethylenglycolfumarate. The selected polymers are placed in beakers containing styrene. The beakers are placed on a heating source, and external heat is supplied. The applied temperature is dependent on the selected polymer. The capability of the styrene to dissolve the selected polymers is observed and noted as a function of temperature and elapsed time.

### Example 3

### Dissolution of polymers in styrene and/or polyester/vinyl ester/epoxy resin and formation of a "gel-coat" layer

Beakers are lined specimen of the polymers used in Example 2 and resin with hardener is poured into the beaker. The resin is cured and during curing the state of the selected polymers (e.g. intact, dissolved and partly dissolved) is observed and noted as a function of elapsed time.

### Example 4

### Dissolution of polymers in styrene and/or polyester/vinyl ester/epoxy resin and formation of a "gel-coat" layer during treatment with heat

The procedure of example 3 is repeated, but additionally a heat source is placed around the outside of the beaker. The state of the selected polymers is observed and noted as a function of temperature and elapsed time.

## Claims

1. A method of producing a fibre-reinforced product which method comprises the steps of:
a) placing at least one porous member in a mould;
b) placing one or more layer(s) of reinforcing fibres in the mould;
c) introducing resin for distribution through the porous member to the fibre layers; and
d) allowing the resin to cure and the porous distribution member to coalesce to form a continuous layer
wherein the porous member is placed so as to form an outermost layer when coalesced, said outer layer having the same characteristics as traditional gelcoat materials.

2. A method according to claim 1, wherein the porous member is placed so as to form an inner layer when coalesced.

3. A method according to any of claims 1-2, wherein the coalescing of the porous member is caused by a chemical treatment, or by influence of heat, radiation or vibrations or a combination thereof.

4. A method according to any of claims 1-3, wherein the coalescing of the porous layer to form a continuous layer is caused at least partly during the curing of the resin.

5. A method according to claim 4, wherein the coalescing of the porous layer to form a continuous layer is caused at least partly by action of styrene present during the curing of the resin.

6. A method according to claim 4, wherein the coalescing of the porous layer to form a continuous layer is caused at least partly by heat produced in the curing process of the resin.

7. A method according to any one of claims 1 to 6, wherein the method is a vacuum forming process.

8. A method according to any one of claims 1 to 7, wherein the fibre-reinforced product is a part of a shell for a wind turbine blade.

## Patentansprüche

1. Verfahren zum Herstellen eines faserverstärkten Produkts, wobei das Verfahren folgende Schritte umfasst:
a) Platzieren mindestens eines porösen Elements in ein Formwerkzeug;
b) Platzieren einer oder mehrerer Schicht(en) aus Verstärkungsfasern in das Formwerkzeug;
c) Einbringen von Harz zur Verteilung durch das poröse Element zu den Faserschichten; und
d) Zulassen, dass das Harz aushärtet und das poröse Verteilungselement zusammenwächst, um eine durchgehende Schicht zu bilden;
wobei das poröse Element derart platziert wird, dass es eine äußerste Schicht bildet, wenn es zusammengewachsen ist, wobei die äußere Schicht die gleichen Eigenschaften aufweist wie herkömmliche Gelcoat-Materialien.

2. Verfahren nach Anspruch 1, wobei das poröse Element derart platziert wird, dass es eine innere Schicht bildet, wenn es zusammengewachsen ist.

3. Verfahren nach einem der Ansprühe 1-2, wobei das Zusammenwachsen des porösen Elements durch eine chemische Behandlung oder durch den Einfluss von Wärme, Strahlung oder Schwingungen oder eine Kombination davon verursacht wird.

4. Verfahren nach einem der Ansprüche 1-3, wobei das Zusammenwachsen der porösen Schicht, um eine durchgehende Schicht zu bilden, mindestens teilweise während des Aushärtens des Harzes verursacht wird.

5. Verfahren nach Anspruch 4, wobei das Zusammenwachsen der porösen Schicht, um eine durchgehende Schicht zu bilden, mindestens teilweise durch die Wirkung von während des Aushärtens des Harzes vorhandenem Styrol verursacht wird.

6. Verfahren nach Anspruch 4, wobei das Zusammenwachsen der porösen Schicht, um eine durchgehende Schicht zu bilden, mindestens teilweise durch beim Aushärtungsprozess des Harzes erzeugte Wärme verursacht wird.

7. Verfahren nach einem der Ansprüche 1 bis 6, wobei es sich bei dem Verfahren um einen Vakuumformprozess handelt.

8. Verfahren nach einem der Ansprüche 1 bis 7, wobei es sich bei dem faserverstärkten Produkt um ein Teil einer Schale für einen Windkraftanlagenflügel handelt.

## Revendications

1. Procédé de production d'un produit renforcé par des fibres, procédé qui comporte les étapes consistant à :
a) placer au moins un élément poreux dans un moule ;
b) placer une ou plusieurs couches de fibres de renforcement dans le moule ;
c) introduire de la résine à des fins de distribution au travers de l'élément poreux jusque dans les couches de fibres ; et
d) laisser la résine durcir et l'élément distributeur poreux fondre afin de former une couche continue,
dans lequel l'élément poreux est placé de manière à former une couche se trouvant le plus à l'extérieur une fois celui-ci fondu, ladite couche extérieure ayant les mêmes caractéristiques que les matériaux plastifiés classiques.

2. Procédé selon la revendication 1, dans lequel l'élément poreux est placé de manière à former une couche intérieure une fois celui-ci fondu.

3. Procédé selon l'une quelconque des revendications 1 à 2, dans lequel la fusion de l'élément poreux est causée par un traitement chimique, ou par l'influence de chaleur, de rayonnement ou de vibrations ou une combinaison de ceux-ci.

4. Procédé selon l'une quelconque des revendications 1 à 3, dans lequel la fusion de la couche poreuse servant à former une couche continue est causée au moins partiellement au cours du durcissement de la résine.

5. Procédé selon la revendication 4, dans lequel la fusion de la couche poreuse servant à former une couche continue est causée au moins partiellement par l'action du styrène présent au cours du durcissement de la résine.

6. Procédé selon la revendication 4, dans lequel la fusion de la couche poreuse servant à former une couche continue est causée au moins partiellement par la chaleur produite au cours du processus de durcissement de la résine.

7. Procédé selon l'une quelconque des revendications 1 à 6, dans lequel le procédé est un processus de formage sous vide.

8. Procédé selon l'une quelconque des revendications 1 à 7, dans lequel le produit renforcé par des fibres est une partie d'une coque d'une pale d'éolienne.
